# EUROPEAN PATENT APPLICATION

(11) **EP 4 478 586 A2**
(43) Date of publication of application: **18.12.2024**
(21) Application number: 24181962.2
(22) Date of filing: 13.06.2024
(51) Int. Cl.: H02K 1/2753, H02K 7/14

(54) **MOTOR AND BINDING MACHINE**

(30) Priority: 13.06.2023 JP 2023096672
(71) Applicant: Max Co., Ltd., Tokyo 103-8502 (JP)
(72) Inventor: ITAGAKI, Osamu, Tokyo, 103-8502 (JP); UTSUGI, Masato, Tokyo, 103-8502 (JP); ISOBE, Takunari, Tokyo, 103-8502 (JP); SUGIHARA, Shinpei, Tokyo, 103-8502 (JP); HASHIZUME, Yutaka, Tokyo, 1040041 (JP); NAKAMURA, Daisuke, Tokyo, 1040041 (JP); ITO, Hiroyuki, Tokyo, 1040041 (JP)
(74) Representative: Samson & Partner Patentanwälte mbB

(57) **Abstract**

There are provided a motor and a binding machine having the motor. The motor includes: a rotor; and a stator. The rotor includes: a rotation shaft; a rotor core; a magnet attached to an outer periphery of the rotor core, the magnet including a protrusion protruding along a direction in which the rotation shaft extends from an end surface of the rotor core; and a sealing member disposed between the protrusion and the rotation shaft.

## Description

### TECHNICAL FIELD

The present disclosure relates to a motor and a binding machine that is driven by a motor and binds an object to be bound such as a reinforcing bar with a wire.

### BACKGROUND ART

Reinforcing bars are used in concrete structures to improve strength, and are bound with wires to be prevented from shifting from prescribed positions during concrete pouring.

In the related art, there is proposed a binding machine referred to as a reinforcing bar binding machine that winds a wire around two or more reinforcing bars and twists the wire wound around the reinforcing bars to bind the two or more reinforcing bars with the wire (for example, see JP6791141B).

In such a binding machine, a motor used in twisting the wire is required to repeat forward and reverse rotation at high speed and perform angle control with high accuracy.

In order to shorten time required for one binding operation and improve binding speed, it is conceivable to reduce inertia of a rotor, that is, reduce a weight of the rotor.

It is accordingly conceivable to apply a surface permanent magnet (SPM) motor, in which a magnet is attached to an outer periphery of a rotor core. In the SPM motor, since the rotor core is not provided on an outer side of the magnet, a volume of the rotor core is reduced, and thus the weight of the rotor can be reduced. This contributes to improvement of the binding speed.

In the SPM motor, since the magnet is attached to the outer periphery of the rotor core, the magnet may be peeled off the rotor core by a centrifugal force applied to the magnet when the rotor rotates.

### SUMMARY OF INVENTION

The present disclosure provides a SPM motor that can prevent peeling of a magnet, and a binding machine including the motor.

According to an illustrative aspect of the present disclosure, a motor includes: a rotor; and a stator. The rotor includes: a rotation shaft; a rotor core; a magnet attached to an outer periphery of the rotor core, the magnet including a protrusion protruding along a direction in which the rotation shaft extends from an end surface of the rotor core; and a sealing member disposed between the protrusion and the rotation shaft.

According to another illustrative aspect of the present disclosure, a motor includes: a rotor; and a stator. The rotor includes: a rotation shaft; a rotor core; a plurality of magnets attached to an outer periphery of the rotor core, the magnets including a plurality of protrusions protruding along a direction in which the rotation shaft extends from an end surface of the rotor core; and a sealing member disposed between the plurality of protrusions.

According to another illustrative aspect of the present disclosure, a binding machine includes: a wire feeder configured to feed a wire; a curl forming unit configured to form an annular feeding path for winding the wire fed by the wire feeder around an object to be bound; a binding unit configured to twist the wire wound around the object to be bound; and a motor configured to drive the binding unit. The motor includes: a rotor; and a stator. The rotor includes: a rotation shaft; a rotor core; a magnet attached to an outer periphery of the rotor core, the magnet including a protrusion protruding along a direction in which the rotation shaft extends from an end surface of the rotor core; and a sealing member disposed between the protrusion and the rotation shaft.

According to another illustrative aspect of the present disclosure, a binding machine includes: a wire feeder configured to feed a wire; a curl forming unit configured to form an annular feeding path for winding the wire fed by the wire feeder around an object to be bound; a binding unit configured to twist the wire wound around the object to be bound; and a motor configured to drive the binding unit. The motor includes: a rotor; and a stator. The rotor includes: a rotation shaft; a rotor core; a plurality of magnets attached to an outer periphery of the rotor core, the magnets including a plurality of protrusions protruding along a direction in which the rotation shaft extends from an end surface of the rotor core; and a sealing member disposed between the plurality of protrusions.

According to another illustrative aspect of the present disclosure, the sealing member is filled between the protrusion of the magnet and the rotation shaft which protrude from the end surface of the rotor core. Further, the sealing member is filled between the protrusions of the magnets which is adjacent along the circumferential direction of the rotor core and protrude from the end surface of the rotor core.

In the present disclosure, the sealing member bonds the rotation shaft and the protrusion of the magnet. In the present disclosure, the sealing member bonds the adjacent protrusion along the circumferential direction of the rotor core. Accordingly, even when the rotor rotates, an unbalanced load in which the magnet is rolled to an outer side by an own inertial force is prevented, and the magnet can be prevented from being peeled off the rotor core.

### BRIEF DESCRIPTION OF DRAWINGS

FIG. 1 is an internal configuration view seen from a side that illustrates an example of an overall configuration of a reinforcing bar binding machine according to an embodiment;
FIG. 2 is a side sectional view illustrating an example of a motor according to the present embodiment;
FIG. 3A is a perspective view illustrating an example of a rotor according to the present embodiment;
FIG. 3B is a side view illustrating the example of the rotor according to the present embodiment;
FIG. 3C is a back view illustrating the example of the rotor according to the present embodiment;
FIG. 4A is a side sectional view illustrating the example of the rotor according to the present embodiment;
FIG. 4B is a back sectional view illustrating the example of the rotor according to the present embodiment;
FIG. 5A is an exploded perspective view illustrating the example of the rotor according to the present embodiment;
FIG. 5B is a perspective view illustrating the example of the rotor according to the present embodiment before being filled with a sealing member;
FIG. 6A is a perspective view illustrating an example of a rotor according to another embodiment;
FIG. 6B is a back sectional view illustrating the example of the rotor according to the other embodiment;
FIG. 7A is a perspective view illustrating an example of a rotor according to another embodiment;
FIG. 7B is a back sectional view illustrating the example of the rotor according to the other embodiment;
FIG. 8A is a perspective view illustrating an example of a rotor according to another embodiment; and
FIG. 8B is a back sectional view illustrating the example of the rotor according to the other embodiment.

### DESCRIPTION OF EMBODIMENTS

An example of a reinforcing bar binding machine according to an embodiment of a motor and a binding machine of the present disclosure will be described below with reference to the drawings.

Configuration Example of Reinforcing Bar Binding Machine According to Present Embodiment

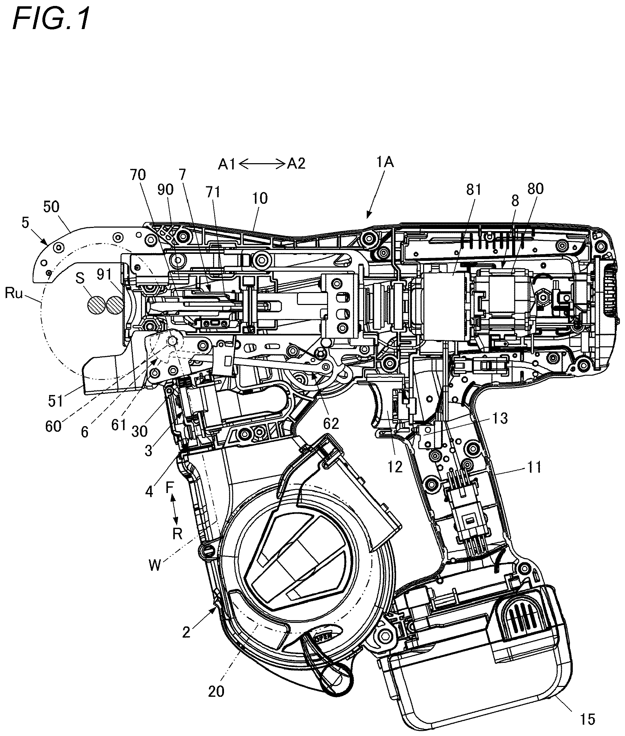

FIG. 1 is an internal configuration view seen from a side that illustrates an example of an overall configuration of the reinforcing bar binding machine according to the present embodiment.

A reinforcing bar binding machine 1A is used by an operator holding it in a hand and includes a body 10 and a handle 11. The reinforcing bar binding machine 1A feeds a wire W in a forward direction indicated by an arrow F, winds the wire W around reinforcing bars S that are objects to be bound, feeds the wire W wound around the reinforcing bars S in a reverse direction indicated by an arrow R, winds the wire W around the reinforcing bars S, and then twists the wire W to bind the reinforcing bars S with the wire W. The reinforcing bar binding machine 1A binds the reinforcing bars S with a plurality of wires W, and in this example, two wires W.

In order to implement the above-described functions, the reinforcing bar binding machine 1A includes a magazine 2 in which the wires W are accommodated, a wire feeder 3 that feeds the two wires W side by side in a radial direction of the wires W, and a wire guide 4 that guides the two wires W fed to the wire feeder 3. The reinforcing bar binding machine 1A further includes a curl forming unit 5 that forms an annular feeding path for winding the two wires W fed by the wire feeder 3 around the reinforcing bars S, and a cutter 6 that cuts the two wires W wound around the reinforcing bars S. The reinforcing bar binding machine 1A further includes a binding unit 7 that twists the two wires W wound around the reinforcing bars S, and a drive unit 8 that drives the binding unit 7.

The magazine 2 houses a reel 20 in a rotatable and detachable manner, on which the elongated wires W are wound to be fed out. Examples of the wires W include wires formed of plastically deformable metal wires, wires having metal wires covered with resins, or stranded wires. The two wires W are wound around the reel 20, and can be pulled out from the reel 20 at the same time.

The wire feeder 3 includes a pair of feeding gears 30 that sandwich and feed the two wires W side by side. In the wire feeder 3, rotation of a feeding motor (not illustrated) is transmitted to one of the pair of feeding gears 30. In the pair of feeding gears 30, rotation of one feeding gear 30 is transmitted to the other feeding gear 30 by gear meshing.

The wire feeder 3 arranges the two wires W side by side along a direction in which the pair of feeding gears 30 are arranged side by side. In the wire feeder 3, rotation directions of the feeding gears 30 are switched by switching forward and reverse rotation directions of the feeding motor (not illustrated), and forward and reverse feeding directions of the wires W are switched.

The wire guide 4 is disposed upstream and downstream (not illustrated) of the feeding gears 30 in the forward feeding direction of the wires W. The wire guide 4 arranges the two entered wires W along the direction in which the pair of feeding gears 30 are arranged side by side, and guides the wires W to between the pair of feeding gears 30.

The curl forming unit 5 includes a curl guide 50 that curls the two wires W fed by the wire feeder 3 and regulates an orientation in which the two wires Ware arranged side by side, and an introducing guide 51 that introduces the two wires W curled by the curl guide 50 to the binding unit 7. The curl forming unit 5 curls the two wires W fed by the wire feeder 3 and passing through the curl guide 50, so that an annular feeding path Ru from the curl guide 50 to the binding unit 7 through the introducing guide 51 as illustrated by two-dot chain lines in FIG. 1 is formed.

The cutter 6 includes a fixed blade 60, a movable blade 61 that cuts the wires W in cooperation with the fixed blade 60, and a transmission mechanism 62 that transmits an operation of the binding unit 7 to the movable blade 61. The cutter 6 cuts the wires W by rotation of the movable blade 61 with the fixed blade 60 as a fulcrum shaft.

The binding unit 7 includes a wire locking body 70 to which the wires W are locked, and a sleeve 71 that actuates the wire locking body 70. The drive unit 8 includes a motor 80 and a speed reducer 81 that performs speed reduction and torque amplification.

The reinforcing bar binding machine 1A includes, at an end of a feeding path of the wires W passing through the annular feeding path Ru and locked by the wire locking body 70, a feeding regulator 90 against which distal ends of the wires W abut. In the reinforcing bar binding machine 1A, the curl guide 50 and the introducing guide 51 of the curl forming unit 5 are provided at a front end of the body 10. The reinforcing bar binding machine 1A is further provided with, between the curl guide 50 and the introducing guide 51 at the front end of the body 10, an abutting portion 91 against which the reinforcing bars S abut.

In the reinforcing bar binding machine 1A, the handle 11 extends downward from the body 10. A battery 15 is detachably attached to a lower portion of the handle 11. In the reinforcing bar binding machine 1A, the magazine 2 is provided in front of the handle 11. In the reinforcing bar binding machine 1A, the wire feeder 3, the cutter 6, the binding unit 7, the drive unit 8 that drives the binding unit 7, and the like are housed in the body 10.

In the reinforcing bar binding machine 1A, a trigger 12 is provided on a front side of the handle 11, and a switch 13 is provided inside the handle 11. The reinforcing bar binding machine 1A controls the feeding motor (not illustrated) and the motor 80 by a controller in accordance with a state of the switch 13 pressed by an operation of the trigger 12.

### Configuration Example of Motor According to Present Embodiment

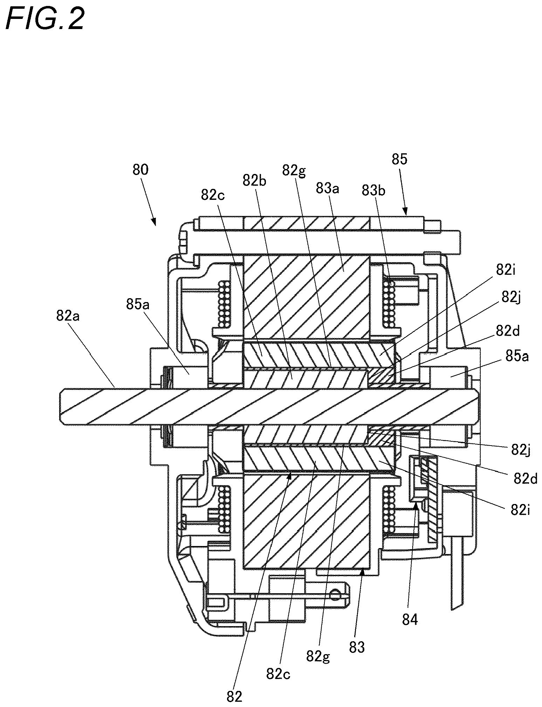

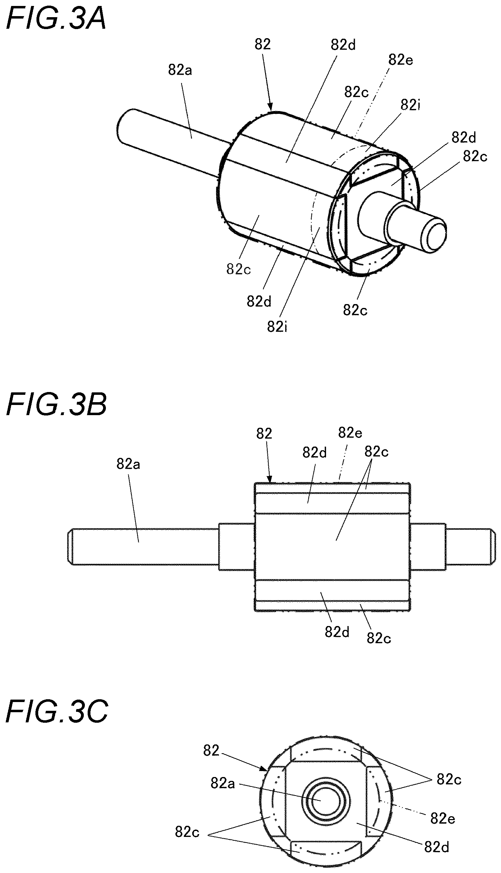

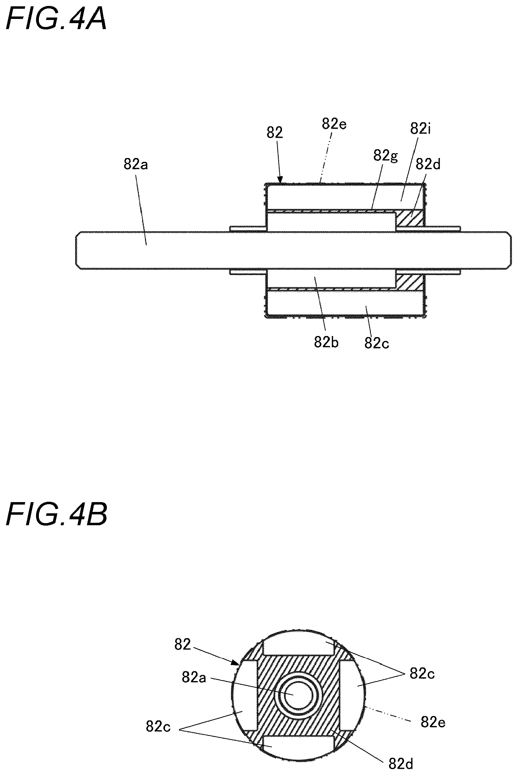

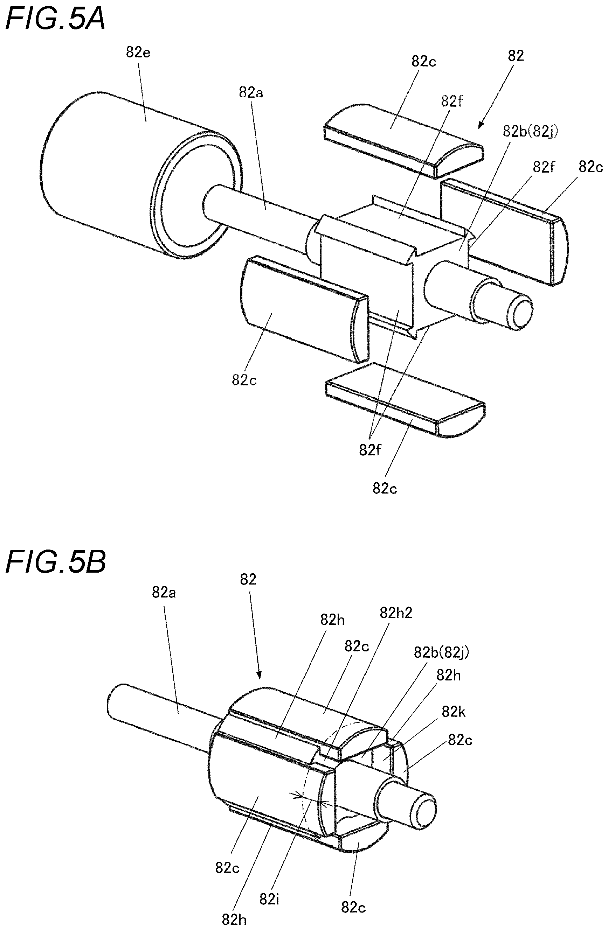

FIG. 2 is a side sectional view illustrating an example of the motor according to the present embodiment. FIG. 3A is a perspective view illustrating the example of the rotor according to the present embodiment, FIG. 3B is a side view illustrating the example of the rotor according to the present embodiment, and FIG. 3C is a back view illustrating the example of the rotor according to the present embodiment. FIG. 4A is a side sectional view illustrating the example of the rotor according to the present embodiment, and FIG. 4B is a back sectional view illustrating the example of the rotor according to the present embodiment. FIG. 5A is an exploded perspective view illustrating the example of the rotor according to the present embodiment, and FIG. 5B is a perspective view of the example of the rotor according to the present embodiment before being filled with a sealing member.

The motor 80 includes a rotor 82, a stator 83, a sensor 84, and a case 85. The motor 80 has a surface permanent magnet (SPM) structure.

The rotor 82 includes a rotation shaft 82a, a rotor core 82b, a magnet 82c, a sealing member 82d, and a covering member 82e.

The rotation shaft 82a is rotatably supported by a bearing 85a provided in the case 85.

The rotor core 82b is made of metal and has a predetermined shape. The rotation shaft 82a is attached to a center of the rotor core 82b. The rotor core 82b is provided with a mounting portion 82f for the magnet 82c on an outer periphery. The mounting portion 82f has an uneven shape to which the magnet 82c is fitted.

The magnet 82c is a permanent magnet and is attached to the outer periphery of the rotor core 82b. The magnet 82c has a shape for being fitted to the mounting portion 82f of the rotor core 82b, and is attached to the mounting portion 82f with an adhesive 82g. The adhesive 82g is, for example, an epoxy resin.

In this example, four magnets 82c are mounted at equal intervals along a circumferential direction of the rotor core 82b of the rotor 82. In the rotor 82, when the magnets 82c are mounted on the mounting portion 82f of the rotor core 82b, a gap 82h is defined between the adjacent magnets 82c along the circumferential direction of the rotor core 82b.

The magnet 82c includes a protrusion 82i. The protrusion 82i protrudes along a direction in which the rotation shaft 82a extends from one end surface 82j of the rotor core 82b. Accordingly, a gap 82k is defined among the protrusion 82i, the rotation shaft 82a, and the one end surface 82j of the rotor core 82b. A gap 82h2 is defined between the adjacent protrusions 82i along the circumferential direction of the rotor core 82b.

The sealing member 82d is a resin that has an adhesive property to members such as the rotation shaft 82a, the rotor core 82b, and the magnet 82c, and is filled in the gap 82k. The sealing member 82d is, for example, an epoxy resin.

The sealing member 82d is filled in the gap 82k and solidified to be bonded to the rotation shaft 82a and the protrusion 82i of the magnet 82c. The sealing member 82d is filled in the gap 82k and solidified to be bonded to the rotation shaft 82a, the end surface 82j of the rotor core 82b, and the protrusion 82i of the magnet 82c. Accordingly, at least the rotation shaft 82a and the protrusion 82i of the magnet 82c bonded by the sealing member 82d. The rotation shaft 82a, the end surface 82j of the rotor core 82b, and the protrusion 82i of the magnet 82c may be bonded by the sealing member 82d. The sealing member 82d is filled in the gap 82h. The sealing member 82d is filled in the gap 82h and solidified to be bonded to the rotor core 82b and the magnet 82c. Accordingly, the adjacent magnets 82c along the circumferential direction of the rotor core 82b are bonded by the sealing member 82d. Further, the sealing member 82d is filled in the gap 82h2 between the adjacent protrusions 82i along the circumferential direction of the rotor core 82b. The sealing member 82d is filled in the gap 82h2 and solidified to be bonded to the protrusion 82i of the magnet 82c. Accordingly, the adjacent protrusions 82i along the circumferential direction of the rotor core 82b are bonded by the sealing member 82d.

A surface of the magnet 82c is painted to improve an adhesive property between the adhesive 82g and the sealing member 82d and prevent rust. An epoxy resin, for example, is painted to the surface of the magnet 82c. The paint applied to the surface of the magnet 82c may have affinity to the adhesive 82g and the sealing member 82d.

The covering member 82e covers an outer periphery of the magnet 82c attached to the mounting portion 82f of the rotor core 82b. The covering member 82e is formed of a resin tube having thermal contraction properties. The covering member 82e covers the outer periphery of the magnet 82c in a state of applying a force to an inner side in a radial direction of the rotor core 82b by thermal contraction. In the rotor 82, the sealing member 82d is filled in the gaps 82k and 82h after the outer periphery of the magnet 82c is covered with the covering member 82e, so that a range to be filled with the sealing member 82d is regulated. The covering member 82e does not cover the rotation shaft 82a.

The stator 83 includes a stator core 83a and a coil 83b. In the motor 80, the rotor 82 rotates by generating a rotary magnetic field by the stator 83.

The sensor 84 includes a Hall IC or the like and is provided in a position facing the protrusion 82i of the magnet 82c. The sensor 84 can detect a rotation direction, a rotation angle, a rotation speed, and the like of the rotor 82 by detecting magnetic flux.

Operation Example of Reinforcing Bar Binding Machine According to Present Embodiment

Next, an operation of binding the reinforcing bars S with the wires W by the reinforcing bar binding machine 1A according to the present embodiment will be described with reference to the drawings.

When the reinforcing bars S are inserted to between the curl guide 50 and the introducing guide 51 of the curl forming unit 5 and the trigger 12 is operated, the feeding motor (not illustrated) is driven in the forward rotation direction, and the two wires W sandwiched between the pair of feeding gears 30 are fed in the forward direction indicated by the arrow F.

The wires W fed in the forward direction are fed to the curl guide 50 of the curl forming unit 5. By passing through the curl guide 50, the wires W are curled to be wound around the reinforcing bars S along the annular feeding path Ru.

The wires W curled by the curl guide 50 is introduced to the introducing guide 51, and is further fed in the forward direction by the wire feeder 3, thereby being introduced to the wire locking body 70. When the distal ends of the wires W are fed to a position abutting against the feeding regulator 90, driving of the feeding motor (not illustrated) is stopped.

After the wires W are stopped from being fed in the forward direction, the motor 80 is driven in the forward rotation direction. The sleeve 71 is regulated from rotating in an operation range in which the wires W are locked by the wire locking body 70. Accordingly, rotation of the motor 80 is converted into linear movement, and the sleeve 71 moves in an arrow A1 direction that is a forward direction. When the sleeve 71 moves in the forward direction, the wires W are locked by a predetermined operation of the wire locking body 70.

After the sleeve 71 is advanced to a position where the wires W are locked by the wire locking body 70, the rotation of the motor 80 is temporarily stopped, and the feeding motor is driven in the reverse rotation direction.

Accordingly, the pair of feeding gears 30 are rotated in the reverse direction, and the wires W sandwiched between the pair of feeding gears 30 are fed in the reverse direction indicated by the arrow R. In the operation of feeding the wires W in the reverse direction, the wires W are wound around the reinforcing bars S.

After the wires W are wound around the reinforcing bars S and the driving of the feeding motor in the reverse rotation direction is stopped, the motor 80 is driven in the forward rotation direction, so that the sleeve 71 further moves in the forward direction indicated by an arrow A1. When the movement of the sleeve 71 in the forward direction is transmitted to the cutter 6 by the transmission mechanism 62, the movable blade 61 rotates, and a prescribed position of the wires W is cut by the operation of the fixed blade 60 and the movable blade 61.

When the motor 80 is driven in the forward rotation direction, the wires W are pressed in the forward direction by the wire locking body 70 almost at the same time as when the sleeve 71 is moved in the forward direction indicated by the arrow A1 and the two wires W are cut, and distal end sides and end sides of the wires W are bent on a reinforcing bar S side.

After the distal end sides and the end sides of the wires W are bent on the reinforcing bar S side, the motor 80 is further driven in the forward rotation direction, so that the sleeve 71 further moves in the forward direction. When the sleeve 71 moves to a predetermined position, rotation regulation of the sleeve 71 is released.

Accordingly, the sleeve 71 rotates when the motor 80 is further driven in the forward rotation direction, and the wires W locked by the wire locking body 70 start to be twisted. When a load applied to the motor 80 is detected to be maximized by twisting the wires W, the forward rotation of the motor 80 is stopped. Next, when the motor 80 is driven in the reverse rotation direction, the sleeve 71 moves in an arrow A2 direction which is a rearward direction in a state of being regulated from rotating.

When the sleeve 71 moves in the rearward direction, the wires W are released from being locked by the wire locking body 70, and the wires W binding the reinforcing bars S come out of the wire locking body 70.

### Operational Effects of Motor

In a reinforcing bar binding machine, a motor used in twisting wires is required to repeat forward and reverse rotation at high speed and perform angle control with high accuracy.

In the reinforcing bar binding machine, an interior permanent magnet (IPM) motor is used in the related art. In the IPM motor, an axially elongated magnet is used for a rotor core, and an end of the magnet is in a vicinity of a sensor implemented by a Hall IC or the like, thereby ensuring control accuracy. In the IPM motor, since the magnet is embedded in the rotor core, the magnet is prevented from being peeled off the rotor core even when the rotor rotates and a centrifugal force is applied to the magnet.

On the other hand, to shorten time required for one binding operation in the reinforcing bar binding machine, it is conceivable to reduce inertia of the rotor, that is, reduce a weight of the rotor, to improve binding speed. To reduce the weight of the rotor, it is conceivable to reduce sizes of the rotor core and the magnet. However, when the rotor core and the magnet are downsized, magnetic flux decreases and an output of the motor decreases.

Accordingly, a SPM motor having a configuration in which a magnet is attached to an outer periphery of a rotor core is considered. In the SPM motor, since the rotor core is not provided on an outer side of the magnet, a volume of the rotor core is reduced, and thus the weight of the rotor can be reduced. This contributes to improvement of the binding speed.

On the other hand, to ensure the same control accuracy as that of the IPM motor, it is still necessary to use an axially elongated magnet for the rotor core, and that an end of the magnet is in a vicinity of the Hall IC. In the SPM motor with such a configuration, the magnet protrudes from an end surface of the rotor core in an axial direction on the outer side of the rotor core.

Accordingly, when the rotor rotates, an unbalanced load may be generated in which the magnet is rolled to the outer side due to an own inertial force, stress may concentrate on a bonding surface end between the magnet and the rotor core, and toughness may deteriorate.

Accordingly, the rotor 82 is configured such that the sealing member 82d is filled in the gap 82k among the rotation shaft 82a, the protrusion 82i of the magnet 82c, and the one end surface 82j of the rotor core 82b. The sealing member 82d filled in the gap 82k at least bonds the rotation shaft 82a and the protrusion 82i of the magnet 82c. The sealing member 82d filled in the gap 82k may bond the rotation shaft 82a and the protrusion 82i of the magnet 82c to the end surface 82j of the rotor core 82b. Accordingly, even when the rotor 82 rotates, an unbalanced load in which the magnet 82c is rolled to the outer side due to an own inertial force is prevented, no stress concentrates on a bonding surface end between the magnet 82c and the rotor core 82b, and toughness equivalent to that of the IPM motor can be ensured.

In the rotor 82, the sealing member 82d is also filled in the gap 82h between the adjacent magnets 82c along the circumferential direction of the rotor core 82b. Accordingly, the adjacent magnets 82c along the circumferential direction of the rotor core 82b are bonded by the sealing member 82d, so that the magnet 82c is prevented from being peeled off the outer periphery of the rotor core 82b. In the rotor 82, the sealing member 82d is also filled in the gap 82h2 between the adjacent protrusions 82i along the circumferential direction of the rotor core 82b. Accordingly, the adjacent protrusions 82i along the circumferential direction of the rotor core 82b are bonded by the sealing member 82d, so that the magnet 82c is prevented from being peeled off the outer periphery of the rotor core 82b. The sealing member 82d may be the same material as the adhesive 82g.

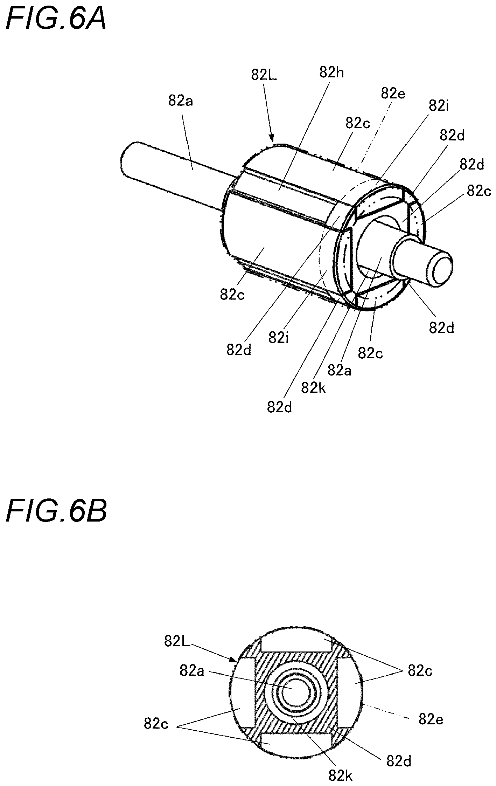

FIG. 6A is a perspective view illustrating an example of a rotor according to another embodiment, and FIG. 6B is a back sectional view illustrating the example of the rotor according to the other embodiment. In a rotor 82L, the adjacent protrusions 82i along the circumferential direction of the rotor core 82b are bonded by the sealing member 82d filled on a protrusion 82i side in the gap 82h2 and the gap 82k between the rotation shaft 82a and the protrusion 82i. On the other hand, in the rotor 82L, no sealing member 82d is filled on a rotation shaft 82a side in the gap 82k. In this manner, the adjacent protrusions 82i and the opposite protrusions 82i along the circumferential direction of the rotor core 82b are bonded by the sealing member 82d. Accordingly, even when the rotation shaft 82a and the protrusion 82i of the magnet 82c are not bonded by the sealing member 82d, the magnet 82c is prevented from being peeled off the outer periphery of the rotor core 82b. The sealing member 82d filled on the protrusion 82i side in the gap 82k may be bonded to the end surface 82j of the rotor core 82b.

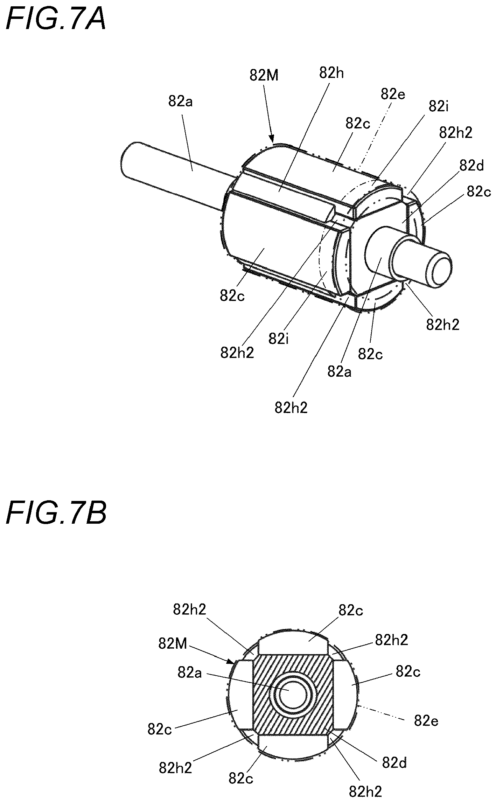

FIG. 7A is a perspective view illustrating an example of a rotor according to another embodiment, and FIG. 7B is a back sectional view illustrating the example of the rotor according to the other embodiment. In a rotor 82M, the protrusion 82i of each magnet 82c is bonded to the rotation shaft 82a by the sealing member 82d filled in the gap 82k. The sealing member 82d filled in the gap 82k may bond the rotation shaft 82a and the protrusion 82i of the magnet 82c to the end surface 82j of the rotor core 82b. On the other hand, in the rotor 82M, no sealing member 82d is filled in the gap 82h2 between the adjacent protrusions 82i along the circumferential direction of the rotor core 82b. In this manner, even when no sealing member 82d is filled in the gap 82h2, the adjacent protrusions 82i and the opposite protrusions 82i along the circumferential direction of the rotor core 82b are bonded by the sealing member 82d filled in the gap 82k, and the magnet 82c is prevented from being peeled off the outer periphery of the rotor core 82b.

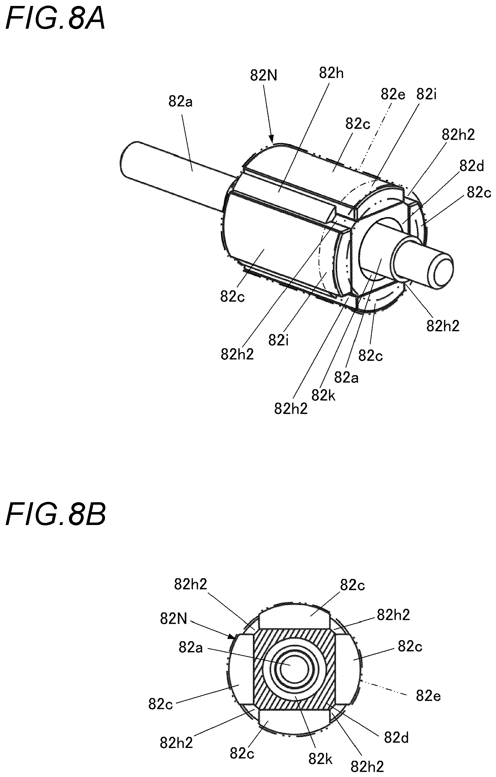

FIG. 8A is a perspective view illustrating an example of a rotor according to another embodiment, and FIG. 8B is a back sectional view illustrating the example of the rotor according to the other embodiment. In a rotor 82N, the adjacent protrusions 82i along the circumferential direction of the rotor core 82b are bonded by the sealing member 82d filled on the protrusion 82i side in the gap 82k between the rotation shaft 82a and the protrusion 82i. On the other hand, in the rotor 82N, no sealing member 82d is filled on the rotation shaft 82a side in the gap 82h2 and the gap 82k. In this manner, the adjacent protrusions 82i and the opposite protrusions 82i along the circumferential direction of the rotor core 82b are bonded by the sealing member 82d filled on the protrusion 82i side in the gap 82k. Accordingly, even when the rotation shaft 82a and the protrusion 82i of the magnet 82c are not bonded by the sealing member 82d, the magnet 82c is prevented from being peeled off the outer periphery of the rotor core 82b.

In the rotor 82, the outer periphery of the magnet 82c is covered with the covering member 82e. The covering member 82e is formed of a resin tube having shrinkage properties, and covers the outer periphery of the magnet 82c in a state of applying a force to an inner side in a radial direction of the rotor core 82b by thermal contraction. Accordingly, when the rotor 82 rotates, an unbalanced load in which the magnet 82c is rolled to the outer side due to the own inertial force is prevented by the covering member 82e.

## Claims

1. A motor comprising:
a rotor; and
a stator, wherein
the rotor includes:
a rotation shaft;
a rotor core;
a magnet attached to an outer periphery of the rotor core, the magnet including a protrusion protruding along a direction in which the rotation shaft extends from an end surface of the rotor core; and
a sealing member disposed between the protrusion and the rotation shaft.

2. A motor comprising:
a rotor; and
a stator, wherein
the rotor includes:
a rotation shaft;
a rotor core;
a plurality of magnets attached to an outer periphery of the rotor core, the magnets including a plurality of protrusions protruding along a direction in which the rotation shaft extends from an end surface of the rotor core; and
a sealing member disposed between the plurality of protrusions.

3. The motor according to claim 1 or 2, wherein
the sealing member is formed of a resin having an adhesive property to the magnet and the rotation shaft.

4. The motor according to claim 3, wherein
a plurality of the magnets are mounted on the rotor core along a circumferential direction of the rotor core, and the sealing member is provided between the adjacent magnets along the circumferential direction of the rotor core.

5. The motor according to claim 1 or 2, further comprising:
a covering member covering an outer periphery of the magnet.

6. The motor according to claim 5, wherein
the covering member has a shrinkage property.

7. The motor according to claim 5, wherein
the sealing member is filled between the rotation shaft and the protrusion in which the outer periphery of the magnet is covered with the covering member.

8. The motor according to claim 3, wherein
the magnet has a coating layer on a surface of the magnet.

9. A binding machine comprising:
a wire feeder configured to feed a wire;
a curl forming unit configured to form an annular feeding path for winding the wire fed by the wire feeder around an object to be bound;
a binding unit configured to twist the wire wound around the object to be bound; and
the motor according to claim 1, the motor being configured to drive the binding unit.

10. A binding machine comprising:
a wire feeder configured to feed a wire;
a curl forming unit configured to form an annular feeding path for winding the wire fed by the wire feeder around an object to be bound;
a binding unit configured to twist the wire wound around the object to be bound; and
the motor according to claim 2, the motor being configured to drive the binding unit.

11. The binding machine according to claim 9 or 10, wherein
the rotation shaft of the rotor protrudes from the rotor core toward the binding unit in an extending direction of the rotation shaft.
